# EUROPEAN PATENT SPECIFICATION

(11) **EP 4 101 519 B1**
(45) Date of publication and mention of the grant of the patent: **06.09.2023**
(21) Application number: 22178015.8
(22) Date of filing: 09.06.2022
(51) Int. Cl.: B01D 53/62, B01D 53/79, B01D 53/80, B01D 53/83, C01F 11/18

(54) **REACTOR FOR ACCELERATED CARBON DIOXIDE MINERALIZATION AND RELATED PROCESS**
REAKTOR FÜR DIE BESCHLEUNIGTE KOHLENDIOXIDMINERALISIERUNG UND ENTSPRECHENDES VERFAHREN
RÉACTEUR POUR LA MINÉRALISATION ACCÉLÉRÉE DU DIOXYDE DE CARBONE ET PROCÉDÉ CORRESPONDANT

(30) Priority: 10.06.2021 IT 202100015158
(43) Date of publication of application: 14.12.2022
(73) Proprietor: Resilco S.r.l., 24126 Bergamo (IT)
(72) Inventor: PLESCIA, Paolo, 0015 Roma (IT)
(74) Representative: Mati, Silvia

(56) References cited:
- EP-A1- 4 005 995
- WO-A1-2013/088391
- US-A1- 2001 022 952
- US-A1- 2011 280 777
- US-A1- 2020 368 677

## Description

### TECHNICAL FIELD

The present invention concerns a reactor for accelerated carbon dioxide mineralization and related process.

In particular, the reactor of the invention makes it possible to obtain a new industrial process to obtain the carbon dioxide mineralization in the forms of solid carbonates of alkali metals, alkaline earth metals and transition metals, using a methodology that effectively accelerates the mineralization reaction and results in the complete consumption of the precursor substances of the carbonate, avoiding the phenomenon of passivation within the reactor itself.

The materials that can be obtained are essentially mineral powders of carbonates of alkaline elements, alkaline earth elements and/or transition metals, with diameter of the granules such that they are compatible with use as fillers, fluxes and pigments in the paper, glass, ceramic and polymer industries.

### BACKGROUND

Carbonatation technologies allow the achievement of two important goals: the reduction of greenhouse gases of CO₂, SO₂ and NO₂ and the practical use of large quantities of special industrial waste with alkaline chemistry present all over the world (steel slag, sludge from water treatment, red alumina sludge, incineration slag, alkaline fly ash, etc.).

US2020368677 describes systems and methods for the sequestration of such emissions, in particular for the capture of CO₂.

Carbonatation is the process of crystallization of carbonates by means of injected CO₂. The technology underlying carbonatation has been studied more and more intensively because of the need to meet the demands to remove as much CO₂ as possible from the planet's atmosphere, through the so-called CCS (Carbon Capture Storage). Among the CCS techniques, CO₂ mineralization is undoubtedly the most appropriate and least invasive. This is essentially due to two reasons: because it produces materials that can be used immediately, the revenue from which makes these technologies cheaper, and because stored CO₂ is permanently fixed.

From a quantitative point of view, a prediction of the effects of carbonatation on the emissions can be made. Let's take the case of a gas-fired power plant, of the most modern type (Armaroli and Po, 2003). A 780 MW gas-fired power plant produces 2 Mt of CO₂, 2700 t of NO₂, 1500 t SO₂, 1350 t of CO, 3200 t of hydrocarbons and benzene and 620 t of particulate matter annually. At least 4 million tonnes of reagent are needed to break down these contents, which could be composed of steel slag (in Italy about 6 Mt of slag from steel and cast iron production and 2 Mt of red alumina sludge per year).

About 3 million tonnes of these materials become carbonates, to be used as a raw material in the preparation of limestones and dolomites for steel and the cement industry and 1 million tonnes of aluminium silicates and iron oxides. This latter part of spent reagents can easily be reintroduced into the production cycles of pozzolanic cements, with great advantages for the environment.

Carbonatation is usually carried out using a CO₂ source (rarely air, more often compressed CO₂), blown into aqueous solutions where alkali or solid ions that exchange alkali ions are present. There are several methods to achieve carbonatation, which we can arbitrarily divide into two categories:
- Carbonatation in solution, "ex situ"
- Carbonatation in solution, "in situ"

The first group of processes ("ex situ") is among those most commonly used and involves the use of aqueous solutions where CO₂ is injected under pressure and where the substances, either solid or in dissolved form, to be carbonated are present. The ex-situ technologies envisage the carbonatation on minerals taken from their deposit, brought to a special plant, therein enriched and activated (mechanically or thermally) and subjected to a carbonatation reaction in pressurized and temperature-controlled reactors. In the work by O'Connor et al (2000) presented at the 2000 International Conference on the Use of Coal in Albany (OR, USA), a technology was presented that adopts the serpentinite and olivine residues as precursors for the absorption of carbon dioxide. The idea is to use these materials to absorb the 10,000 tonnes of CO₂ emitted per day by a 500 MW coal-fired power plant. The process that requires crushing and granulating the mineral with dimensional selection (only granules smaller than 5 mm) has a yield of about 83%.

It is clear from the above that handling and treating a mass of thousands of tonnes of mineral every day is only possible at sites where there is already a quantity of discarded material, such as a mining landfill. Under such a condition, CO₂ cannot be pumped and maintained under supercritical conditions, which is a condition that can only be maintained in a closed and pressurised vessel, or at the time of contact between the solution and the incoming gas. This is why we are talking about the second group of processes ("in situ").

The idea is therefore to create a dense network of air ducts inside the mining landfill, introduce a solution of water, sodium chloride and pump CO₂ under high pressure into the ducts, in order to favour the mobility of the solution in the interstices between the mineral granules. In this sense, the technique is simple and inexpensive: there is no preliminary grinding or conditioning and no handling of the mineral. It involves bringing CO₂ from large users (e.g. steelworks, thermal power plants and cement kilns), to the gas exit pressure of the chimneys, directly to the landfill through a pipeline, then pumping this fluid in a controlled manner inside the basin and then activating carbonatation. The problem in this case is the reaction time, which can be considerably long.

For all these reasons, the need to have an optimal reactor for the carbonatation process and a related process that can have high mineralization yields, recycling of the water produced and ease of use is particularly felt.

The main problems inherent in mineralization processes can be listed as follows:
- Problem of the passivation of the precursors
- Mineralization speed
- Management of the concretionary masses thereby forming in the reactors
- Problem of the dimension of the carbonate granules.

The first problem arises from the fact that the granules of the precursors, placed inside a liquid batch, tend to react from the surface of the granule inwards. Once a certain depth is reached, the exchange with the outside of the ions that form the carbonaceous compounds ceases, therefore the mineralization process stops. In order to try to overcome these drawbacks, an attempt is made to reduce the dimension of the granules as much as possible through preliminary grinding processes, but this system significantly increases the cost of the process.

The second problem depends on the solubility of CO₂ at room pressure in water. The phenomenon of CO₂ mineralization occurs essentially at the contact between the CO₂ molecules and the surface of the precursor mineral; in this way water plays a fundamental role, both in removing cations from the mineral and in causing the carbonate formation reaction to take place. On the other hand, a low solubility of the cations (e.g. Ca and Mg) and a low solubility of CO₂ in water do not allow a high reaction rate. To give an example, let's consider a solubility of calcium hydroxide equal to 1.7 g/l (20 mM/l) and CO₂ equal to 1.48 g/l (38 mM/l). Then 44 litres of mineralized water at Ca(OH)₂ and 26 litres of water with dissolved CO₂ are needed respectively to form a CaCO₃ mass (PM = 100.09 g/M). In essence, one cubic meter of water would produce 14.3 kg of CaCO₃, making up the dissolutions of 74 kg of calcium hydroxide and 44 kg of carbon dioxide. The yield, in terms of water and in terms of time, is therefore extremely low.

The third problem concerns the formation of static concretionary masses inside the reactors, which in the long run create enormous problems in the management of the plants, blocking valves and ducts.

Last but not least, the problem of the dimension of the carbonate granules, which increases as the process progresses.

### OBJECTS AND SUMMARY OF THE INVENTION

An object of the present invention is to overcome the drawbacks of the prior art. In particular, it is an object of the present invention to obtain a new reactor for carbon dioxide mineralization in the forms of solid carbonates of alkali metals, alkaline earth metals and transition metals.

A further object of the present invention is to have a process for carbon dioxide mineralization in the forms of solid carbonates of alkali metals, alkaline earth metals and transition metals.

A further object of the present invention is to have a process for carbon dioxide mineralization in the forms of solid carbonates of alkali metals, alkaline earth metals and transition metals with the recycling of the reaction water.

A further object of the present invention is to have a process that makes it possible to obtain carbonates produced in nanometric form from the treatment of hazardous waste, such as for example "fly ash" from municipal waste incineration, from which industrial products such as pozzolane can also be extra

These and other objects of the present invention are achieved by a reactor and a process as defined in the annexed claims, which form an integral part of the present description.

In general it is described a reactor for carbon dioxide mineralization in the form of solid carbonates of alkali metals, alkaline earth metals and transition metals comprising:
a. A loading hopper of the precursor material and water
b. A reaction chamber equipped with a first opening for the injection of CO₂ and water, a second opening for introducing air coming from a pump and a third opening towards open air for recovering solid carbonates
c. A system of passive cavitators placed under the reaction chamber

The term "passive cavitators" in the present invention refers to static mechanical systems (without moving mechanical parts), such as, for non-exhaustive example, the "Venturi" tube, where the aqueous solution is passed to pressures other than environmental pressures and where the geometries of the mechanical system results in the formation of cavitation bubbles.

In a preferred aspect of the invention the reactor for carbon dioxide mineralization in the form of solid carbonates of alkali metals, alkaline earth metals and transition metals is characterized in that the supply of the precursor material and water is controlled through a device such as a rotary valve or a screw.

Advantageously, the reactor of the invention is further characterized in that the reaction chamber is a flotation chamber in which the first opening consists of a porous bed which acts as a counter electrode with respect to a control grid which acts as an electrode.

In another preferred aspect of the invention the turbine injectors are Venturi tubes fed by a single/double layer turbine, moved by a motor at a speed of at least 20,000 rpm. A further preferred aspect of the reactor of the present invention concerns the control grid which is a metallic mesh with holes having a diameter comprised between 1 mm and 1 cm.

Advantageously, the reactor of the invention has a porous bed that is made of flotation synthetic conductive carbon fibers.

A particularly relevant aspect concerns the process for carbon dioxide mineralization in the forms of solid carbonates of alkali metals, alkaline earth metals and transition metals using the reactor of the invention.

Said process comprises the following steps:
a. loading the precursor material having dimension preferably lower than 1 mm and water into a reaction chamber through a hopper
b. feeding the reaction chamber with air coming from the pump and with CO2 and water coming from a system of turbine injectors and passing through a system of passive cavitators

In a preferred aspect the process of the invention comprises two further steps:
c. floating the mixture of precursor material and water as of step a. in presence of organic surfactant collectors and, possibly, of suitable depressant substances in the reaction chamber,
d. controlling the stream of thereby forming carbonates by means of a conductive porous bed which acts as a counter electrode and a control grid which acts as an electrode
e. feeding the stream of carbonates together with the flotation water into a cyclone adapted to separate carbonates from water
f. recycling the water into the system of the turbine injectors through a tube connected to a centrifugal pump that draws water from the cyclone and feeds the turbine and passive cavitators; in an alternative solution, the same turbine acts as an aspirator directly from the cyclone

In a preferred aspect of the process of the invention the organic surfactant collectors used are compounds which make the surface of the precursor material hydrophobic and are preferably chosen among sodium oleate, dodecylamine, dodecylphosphate, fatty acids from sunflower oil, palm oil, coconut oil and corn oil.

Advantageously, the depressant substances described in the process are compounds which make the surface of the undesired materials present in the precursor material hydrophilic and are preferably chosen among sodium silicate, sodium hexametaphosphate and sodium pyrophosphate.

Finally, in a preferred aspect of the process of the invention the control grid is polarized with voltages comprised between 0.5 V/cm and 10 V/cm.

A peculiar aspect of the invention is that the carbonates that are produced by the process of the invention are in nanometric form with a particle size of a few tens of nanometers, for example 10-100 nm.

### BRIEF DESCRIPTION OF THE DRAWINGS

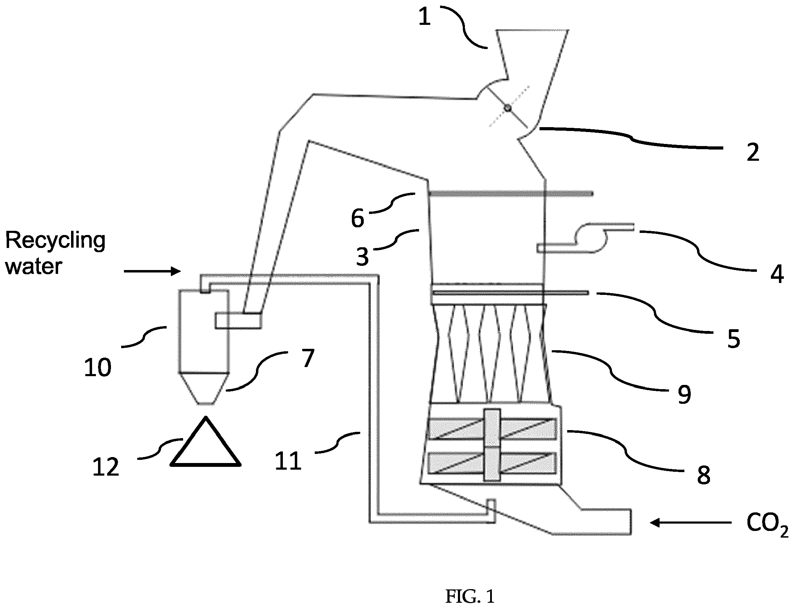

Further features, objects and advantages of the present invention will become clearer from the following detailed description made with reference to the accompanying figure. It must in any case be understood that there is no intention to limit the invention to the specific embodiment illustrated, but the scope of the invention is as defined in the claims.

In such a figure, a preferred embodiment of a reactor for accelerated carbon dioxide mineralization according to the present invention is schematically represented.

### DETAILED DESCRIPTION OF THE INVENTION

Unless otherwise defined, all the terms of the art, notations and other scientific terms used herein are intended to have the meanings commonly understood by those skilled in the art to which this description belongs. In some cases, terms with commonly understood meanings are defined herein for clarity's sake and/or ready reference; the insertion of such definitions in the present description must therefore not be interpreted as representative of a substantial difference with respect to what is generally understood in the art.

The terms "comprising", "having", "including" and "containing" are to be understood as open terms (i.e., the meaning "comprising, but not limited to") and are to be considered as a support also for terms such as "essentially consist of", "essentially consisting of", "to consist of" or "consisting of".

The use of "for example", "etc.", "or" indicates non-exclusive alternatives without limitation, unless otherwise indicated. The use of "comprises" and "includes" means "comprises or includes, but not limited to", unless otherwise indicated.

With reference to the attached figure, it schematically represents the reactor and the process diagram. In particular, the picture shows the hopper 1, the feeding device such as a rotary valve or screw 2, a reaction chamber 3, an air supply pump 4, a porous bed 5, a control grid 6, an opening towards open air 7, a system of turbine injectors 8, a system of passive cavitators 9, a cyclone 10, a tube for recycling water 11 and carbonates obtained in nanometric form 12.

In detail, the reactor for carbon dioxide mineralization in the form of solid carbonates of alkali metals, alkaline earth metals and transition metals comprises a loading hopper 1 of the precursor material and water and a reaction chamber 3 equipped with a first opening for injection of CO₂ and water, a second opening for introducing air coming from a pump 4 and a third opening towards open air 7 for recovering solid carbonates.

The supply of precursor material and water is controlled through a device 2 such as a rotary valve or a screw.

The reaction chamber 3 is a flotation chamber in which the first opening consists of a porous bed 5 which acts as a counter electrode with respect to a control grid 6 which acts as an electrode.

The turbine injectors are Venturi tubes fed by a single/double layer turbine, moved by an electric motor at a speed of at least 20,000 rpm.

The control grid 6 is a metallic mesh with holes having a diameter comprised between 1 mm and 1 cm, while the porous bed 5 consists of conductive synthetic carbon fibers.

A second object of the invention consists in the process for carbon dioxide mineralization in the forms of solid carbonates of alkali metals, alkaline earth metals and transition metals.

It comprises the following steps:
a. loading the precursor material having dimension preferably lower than 1 mm and water into a reaction chamber 3 through a hopper 1; and
b. feeding the reaction chamber 3 with air coming from the pump 4 and with CO₂ and water coming from a system of turbine injectors 8 and passing through a system of passive cavitators 9.

The "precursor material" of the process of the invention should preferably have the following characteristics:
- be a composition rich in alkalis and a high reactivity in water at basic pH;
- have a controlled particle size, possibly lower than one mm; and/or
- be available in large quantities.

For example, the "precursor material" may consist of waste, such as steel slag, basic industrial sludge from civil and industrial waste, paper mills, alumina, zinc and titanium dioxide (red sludge) treatment processes, and fly ash from incineration.

These materials have very large volumetries, particle sizes often below 10 microns, and are extremely rich in alkali. Obviously, sterile mining residues, such as serpentine tailings, iron and manganese mine tailings and phosphorus tailings deposits, are also part of these materials.

The loading hopper 1 is a steel hopper, preferably equipped with a rotary valve to feed the cell 3. Alternatively, it can be replaced with a screw feeder.

In the reaction chamber 3 the flotation of the mixture of precursor material and water takes place in presence of organic collectors.

The reaction chamber 3 is fed with air coming from the pump 4 and with CO₂ and water coming from a system of turbine injectors 8 and passing through a system of passive cavitators 9.

The flotation air pump 4 is, in a preferred aspect of the invention, a centrifugal pump, with medium low flow (100-500 litres/minute) which has a diffuser on the float inlet neck to generate a stream of air microbubbles that push the flotation, already started with the residual CO2 coming from the bottom of the float.

The system of turbine injectors 8 preferably consists of Venturi tubes designed to cause the detachment of the fluid streamlines from the inner wall of the injectors and thus causing cavitation. They are fed by a single/double layer turbine, moved by an electric motor at a speed of at least 20,000 RPM. The turbine accelerates the stream of air and water coming from, respectively, the intake of exhausted air (e.g., combustion fumes) or from the atmospheric air and from the Venturi in which water is drawn from the cyclone 10. The airflow is thus injected into a series of cones that flow into the cavitation tubes. In this circuit, the turbine(s) (in the case they are a series of carbonatation units placed in parallel) have the objective of mixing water and air, containing the CO₂ and other gases to be mineralized, increasing the cavitation speed. The water-gas mixture will enter the cavitators, where it will be "detached" from the solid surfaces, creating cavitation bubbles and increasing the solubility of the gas in the water.

In the flotation process used, the gas bubbles that are generated consist of the surplus of gas that has not dissolved in water during cavitation; airflows from outside can be added to it. The substances that assist the flotation of the carbonates generated are organic surfactant "collectors", which make the surface of the minerals to be "floated" completely hydrophobic and can therefore be easily attacked by air bubbles: the main collectors for carbonates are: sodium oleate (from 20 to 50 mg/l), dodecylamine (DDA) (from 60 to 160 mg/l), dodecyl phosphate (from 50 to 150 mg/l), fatty acids from sunflower oil, palm oil, coconut oil, corn oil (from 20 to 400 mg/l). In the presence of other minerals to be suppressed, "depressant" substances are added which make a surface of undesired materials completely hydrophilic and therefore not floatable; these substances are essentially sodium silicates (from 100 to 300 mg/l), sodium hexametaphosphate (from 50 to 200 mg/l), sodium pyrophosphate (up to 600 mg/l). The flotation process consists in mixing the water-solid mix with the collector, present in a small quantity (from 10 to 1000 g/m³ of liquid) and the possible depressant (the same quantities), then in introducing air in the form of microbubbles, which stick to the surfaces of the minerals that have become hydrophobic and bring them to the surface, where they are separated and collected.

The flotation of the carbonaceous minerals of the invention is the fastest and cheapest method for using the precursor material at the highest possible yield. In fact, flotation results in a very fast separation of the carbonates newly formed in the turbidity and leaves the precursor material always with fresh surfaces, suitable to be again subject to carbonatation.

The stream of thereby forming carbonates is controlled by means of a conductive porous bed 5 which acts as a counter electrode and a control grid 6 which acts as an electrode.

The control grid 6 which acts as an electrode is polarized with low voltages, preferably between 0.5 V/cm and 20 V/cm, with selectable waveforms (spikes, square waves, sinusoidal, etc.), in order to stimulate the formation of hydrocarbon anions (HCO₃)⁻ and OH- and cations (Ca²⁺, Al³+, K+, etc.) in the liquid stream in order to increase the mineralization yield. It can also be used to modify the potentials of the surfaces of the minerals and aid the depression or the activation of some mineral species.

The control grid 6 is preferably made with a metallic mesh with holes ranging from mm to cm, according to the desired flotation speeds and it has the porous bed 5 as a counter electrode.

The porous bed 5 is preferably made of conductive synthetic carbon fibers, which have the dual purpose of preventing the precursor slag granules from passing into the lower part of the system and of letting the residual CO₂ bubbles to exit. In combination with the control grid 6, the porous bed 5 polarizes the liquid creating ion streams that facilitate the mineralization and the displacement of the nanocrystals.

The stream of carbonates feeds, together with the flotation water a cyclone 10 adapted to separate carbonates from water and the water is recycled in the system 8 of turbine injectors by means of a tube 11.

Compared to the direct CO₂ pumping technologies, the systems we have integrated tend to remove carbonaceous substances, avoiding incrustations. In particular, the effect of cavitation is fundamental for this type of result.

The control of the particle size depends on the physics of the cavitation itself: the cavitation bubbles formed near the surfaces of the precursor materials have a very short life (from a few ms to a few tens of ms), after which they implode, causing an increase in pressure inside the bubble that results in the formation of a real plasma; their implosion fragments the surfaces of the granules, around dimensions of the order of a few tens of nm preferably between 10 and 100 nm. The nanoscopic fragments crystallize rapidly in the form of carbonates 12. The subsequent flotation causes the newly formed crystals to be transported very quickly towards the surface of the liquid, removing from them the raw material for their enlargement.

In a nutshell in a preferred example of the process of the invention: the precursor material, for example disposable sludge, is introduced into the loading hopper 1 through a screw 2.

The precursor material places itself on the porous bed 5 consisting of synthetic fibers, which support the weight of the material and at the same time let the turbulent stream of CO₂ pass from the system of cavitators 9.

The porous bed 5 with the precursor material is sprayed with a turbulent stream generated by the turbine system 8 or, which accelerates the stream of water, drawn from the system of cavitators 9 and CO₂ and from air coming from a centrifugal pump 4.

The thereby forming carbonates are quickly detached from the precursor particles by the stream of air bubbles that transport them to the top of the liquid column, also due to the effect of the floating substances introduced.

The carbonates pass the control grid 6, which determines the hydrodynamic dimensions of the particles that can pass from those that need to be reprocessed. The control grid 6 is made so as to control the stream through a pulsating electrical potential, which is controlled together with the stream of the flotation air. The carbonaceous particles float on the surface of the water column and, transported by the same stream, they fall together with the flotation water into the cyclone 10. The cyclone 10 removes the solid fraction from the liquid one; the disposable solid is collected in the lower part while the liquid is recycled and pumped into the reactor, by means of the tube 11 below the turbine.

The benefits of this technology are manifold:
1) The precursor is consumed and the conditions for the passivation of the material are not fulfilled;
2) Carbon dioxide is maximally solubilized by the effect of the cavitators and of the turbulence induced by the turbines placed at the inlet of the circuit;
3) Conditions for the incrustation build-up cannot occur, in fact the plant remains clean;
4) The system is suitable for use in continuous production;
5) The carbonatation efficiency is greater than 85% of CO₂ mineralized on the total CO₂ introduced
6) The particle sizes of the carbonates are controlled "electrically", producing carbonaceous nanomaterials.

In conclusion, all details are substitutable by other technically equivalent elements; the materials used, as well as the contingent shapes and dimensions, may be any according to the specific implementation requirements without departing from the scope of protection of the following claims.

## Claims

1. Reactor for carbon dioxide mineralization in the solid carbonate forms of alkali metals, alkaline earth metals and transition metals comprising:
a. a loading hopper (1) of a precursor material and water;
b. a reaction chamber (3) equipped with
- a first opening for injection of CO₂ and water,
- a second opening for introducing air coming from a pump (4), and
- a third opening towards open air (7) for recovering solid carbonates;
c. a system of passive cavitators (9) placed under the reaction chamber; and
d. a system of turbine injectors (8) placed under the system of passive cavitators (9), wherein the first opening of the reaction chamber (3) is configured for injecting CO₂ and water coming from the system of turbine injectors (8) and passing through the system of passive cavitators (9).

2. Reactor according to claim 1, wherein the supply of precursor material and water is controlled through a device (2) such as a rotary valve or a screw.

3. Reactor according to claim 1 or 2, wherein the reaction chamber (3) is a flotation chamber in which the first opening consists of a porous bed (5) which acts as a counter electrode with respect to a control grid (6) which acts as an electrode.

4. Reactor according to any one of claims from 1 to 3, wherein the turbine injectors (8) are Venturi tubes fed by a single or double-layer turbine, moved by an electric motor at a speed of at least 20,000 rpm.

5. Reactor according to any one of the previous claims, wherein the control grid (6) is a metallic mesh with holes having a diameter comprised between 1 mm and 1 cm.

6. Reactor according to any one of the previous claims, wherein the porous bed (5) is made of synthetic carbon fibers.

7. Process for carbon dioxide mineralization in the solid carbonate forms of alkali metals, alkaline earth metals and transition metals comprising the steps consisting of:
a. loading a precursor material having dimension preferably lower than 1 mm and water into a reaction chamber (3) through a hopper (1); and
b. feeding the reaction chamber (3) with air coming from a pump (4) and with CO₂ and water coming from a system of turbine injectors (8) and passing through a system of passive cavitators (9).

8. Process according to claim 7, comprising the further steps which consist of:
c. floating the mixture of precursor material and water as of step a. in presence of organic surfactant collectors and, possibly, of suitable depressant substances in the reaction chamber (3);
d. controlling the stream of thereby forming carbonates by means of a conductive porous bed (5) which acts as a counter electrode and a control grid (6) which acts as an electrode;
e. feeding the stream of carbonates together with the flotation water into a cyclone (10) adapted to separate carbonates from water; and
f. recycling the water into the system of turbine injectors (8) by means of a tube (11).

9. Process according to claim 8, wherein the organic surfactant collectors are compounds which make the surface of the precursor material hydrophobic and are preferably chosen among sodium oleate, dodecylamine, dodecylphosphate, fatty acids from sunflower oil, palm oil, coconut oil and corn oil.

10. Process according to claim 8, wherein the depressant substances are compounds which make the surface of the undesired materials present in the precursor material hydrophilic and are preferably chosen among sodium silicate, sodium hexametaphosphate and sodium pyrophosphate.

11. Process according to any one of claims from 8 to 10, wherein the control grid (6) is polarized with voltages comprised between 0.5 V/cm and 20 V/cm.

## Patentansprüche

1. Reaktor für die Mineralisierung von Kohlenstoffdioxid in feste Carbonatformen von Alkalimetallen, Erdalkalimetallen und Übergangsmetallen, umfassend:
a. einen Fülltrichter (1) für ein Präkursormaterial und Wasser;
b. eine Reaktionskammer (3), ausgestattet mit
- einer ersten Öffnung zum Einleiten von CO₂ und Wasser,
- einer zweiten Öffnung zum Einspeisen von Luft, die von einer Pumpe (4) kommt, und
- einer dritten Öffnung ins Freie (7) zur Rückgewinnung von festen Carbonaten;
c. ein System von passiven Kavitatoren (9), das unter der Reaktionskammer angeordnet ist, und
d. ein System von Turbineninjektoren (8), das unter dem System von passiven Kavitatoren (9) angeordnet sind,
wobei die erste Öffnung der Reaktionskammer (3) konfiguriert ist, um CO₂ und Wasser einzuleiten, das aus dem System von Turbineninjektoren (8) kommt und durch das System von passiven Kavitatoren (9) strömt.

2. Reaktor nach Anspruch 1, bei dem die Zufuhr von Präkursormaterial und Wasser durch eine Vorrichtung (2) wie ein Drehventil oder eine Schnecke gesteuert wird.

3. Reaktor nach Anspruch 1 oder 2, wobei die Reaktionskammer (3) eine Flotationskammer ist, in der die erste Öffnung aus einem porösen Bett (5) besteht, das als eine Gegenelektrode wirkt in Bezug auf ein Steuergitter (6), das als eine Elektrode wirkt.

4. Reaktor nach einem der Ansprüche 1 bis 3, wobei die Turbineninjektoren (8) Venturi-Rohre sind, die von einer ein- oder zweischichtigen Turbine gespeist werden, die von einem Elektromotor mit einer Drehzahl von mindestens 20 000 U/min bewegt wird.

5. Reaktor nach einem der vorhergehenden Ansprüche, wobei das Steuergitter (6) ein Metallgitter mit Löchern ist, die einen Durchmesser aufweisen, der zwischen 1 mm und 1 cm umfasst.

6. Reaktor nach einem der vorhergehenden Ansprüche, wobei das poröse Bett (5) aus synthetischen Kohlenstofffasern ist.

7. Verfahren zur Mineralisierung von Kohlenstoffdioxid in feste Carbonatformen von Alkalimetallen, Erdalkalimetallen und Übergangsmetallen, umfassend der Schritte, bestehend aus:
a. Füllen eines Präkursormaterials, das eine Abmessung von bevorzugt weniger als 1 mm aufweist, und Wasser in eine Reaktionskammer (3) durch einen Trichter (1); und
b. Speisen der Reaktionskammer (3) mit Luft, die von einer Pumpe (4) kommt, und mit CO₂ und Wasser, das von einem System von Turbineninjektoren (8) kommt und durch ein System von passiven Kavitatoren (9) strömt.

8. Verfahren nach Anspruch 7, umfassend die weiteren Schritte, bestehend aus:
c. Flotieren der Mischung aus Präkursormaterial und Wasser aus Schritt a. in Gegenwart von organischen Tensidkollektoren und gegebenenfalls geeigneten Dämpfungssubstanzen in der Reaktionskammer (3);
d. Steuern des Stroms der sich dabei bildenden Carbonate mit Hilfe eines leitfähigen porösen Bettes (5), das als eine Gegenelektrode wirkt, und eines Steuergitters (6), das als Elektrode wirkt;
e. Einleiten des Carbonatstroms zusammen mit dem Flotationswasser in einen Zyklon (10), der zur Abtrennung der Carbonate vom Wasser geeignet ist; und
f. Rückführen des Wassers in das System der Turbineninjektoren (8) mit Hilfe eines Rohrs (11).

9. Verfahren nach Anspruch 8, wobei die organischen Tensidkollektoren Verbindungen sind, die die Oberfläche des Präkursormaterials hydrophob machen und bevorzugt ausgewählt sind aus Natriumoleat, Dodecylamin, Dodecylphosphat, Fettsäuren aus Sonnenblumenöl, Palmöl, Kokosnussöl und Maisöl.

10. Verfahren nach Anspruch 8, wobei die Dämpfungssubstanzen Verbindungen sind, die die Oberfläche der im Präkursormaterial vorhandenen unerwünschten Materialien hydrophil machen und bevorzugt ausgewählt sind aus Natriumsilicat, Natriumhexametaphosphat und Natriumpyrophosphat.

11. Verfahren nach einem der Ansprüche 8 bis 10, wobei das Steuergitter (6) mit Spannungen, die zwischen 0,5 V/cm und 20 V/cm umfassen, polarisiert wird.

## Revendications

1. - Réacteur pour la minéralisation du dioxyde de carbone dans les formes de carbonates solides de métaux alcalins, de métaux alcalino-terreux et de métaux de transition, comprenant :
a. une trémie de chargement (1) d'un matériau précurseur et d'eau ;
b. une chambre de réaction (3) équipée
- d'une première ouverture pour l'injection de CO₂ et d'eau ;
- d'une seconde ouverture pour l'introduction d'air provenant d'une pompe (4) ; et
- d'une troisième ouverture à l'air libre (7) pour la récupération des carbonates solides ;
c. un système de cavitateurs passifs (9) placé sous la chambre de réaction ; et
d. un système d'injecteurs de turbine (8) placé sous le système de cavitateurs passifs (9),
dans lequel la première ouverture de la chambre de réaction (3) est configurée pour injecter du CO₂ et de l'eau provenant du système d'injecteurs de turbine (8) et traversant le système de cavitateurs passifs (9).

2. - Réacteur selon la revendication 1, dans lequel l'alimentation en matériau précurseur et en eau est contrôlée par un dispositif (2) tel qu'une soupape rotative ou une vis.

3. - Réacteur selon l'une des revendications 1 ou 2, dans lequel la chambre de réaction (3) est une chambre de flottation dans laquelle la première ouverture consiste en un lit poreux (5) qui agit comme contre-électrode par rapport à une grille de commande (6) qui agit comme électrode.

4. - Réacteur selon l'une quelconque des revendications 1 à 3, dans lequel les injecteurs de turbine (8) sont des tubes de Venturi alimentés par une turbine à simple ou double couche, mise en mouvement par un moteur électrique à une vitesse d'au moins 20 000 tpm.

5. - Réacteur selon l'une quelconque des revendications précédentes, dans lequel la grille de commande (6) est une maille métallique avec des trous ayant un diamètre compris entre 1 mm et 1 cm.

6. - Réacteur selon l'une quelconque des revendications précédentes, dans lequel le lit poreux (5) est fait de fibres de carbone synthétiques.

7. - Procédé de minéralisation du dioxyde de carbone dans les formes de carbonates solides de métaux alcalins, de métaux alcalino-terreux et de métaux de transition, comprenant les étapes consistant à :
a. charger un matériau précurseur ayant une dimension de préférence inférieure à 1 mm et de l'eau dans une chambre de réaction (3) par l'intermédiaire d'une trémie (1); et
b. alimenter la chambre de réaction (3) en air provenant d'une pompe (4) et en CO₂ et en eau provenant d'un système d'injecteurs de turbine (8) et traversant un système de cavitateurs passifs (9).

8. - Procédé selon la revendication 7, comprenant les étapes supplémentaires qui consistent à :
c. faire flotter le mélange de matériau précurseur et d'eau à partir de l'étape a. en présence de collecteurs tensio-actifs organiques et, éventuellement, de substances dépresseurs appropriées dans la chambre de réaction (3);
d. contrôler le courant de carbonates ainsi formés au moyen d'un lit poreux conducteur (5) qui agit comme contre-électrode et d'une grille de commande (6) qui agit comme électrode ;
e. introduire le courant de carbonates conjointement avec l'eau de flottation dans un cyclone (10) apte à séparer les carbonates de l'eau ; et
f. recycler l'eau dans le système d'injecteurs de turbine (8) au moyen d'un tube (11).

9. - Procédé selon la revendication 8, dans lequel les collecteurs tensio-actifs organiques sont des composés qui rendent hydrophobe la surface du matériau précurseur et sont, de préférence, choisis parmi l'oléate de sodium, la dodécylamine, le dodécylphosphate, les acides gras provenant d'huile de tournesol, d'huile de palme, d'huile de noix de coco et d'huile de maïs.

10. - Procédé selon la revendication 8, dans lequel les substances dépresseurs sont des composés qui rendent hydrophile la surface des matériaux indésirables présents dans le matériau précurseur et sont, de préférence, choisis parmi le silicate de sodium, l'hexamétaphosphate de sodium et le pyrophosphate de sodium.

11. - Procédé selon l'une quelconque des revendications 8 à 10, dans lequel la grille de commande (6) est polarisée avec des tensions comprises entre 0,5 V/cm et 20 V/cm.
